# EUROPÄISCHE PATENTSCHRIFT

(11) **EP 0 790 586 B1**
(45) Veröffentlichungstag und Bekanntmachung des Hinweises auf die Patenterteilung: **18.07.2001**
(21) Anmeldenummer: 97100489.0
(22) Anmeldetag: 15.01.1997
(51) Int. Cl.: G07F 7/06

(54) **Transportwagen mit Pfandschloss**
Transport trolley with a refunding lock
Chariot de transport à serrure de consigne

(30) Priorität: 16.02.1996 DE 19605805
(43) Veröffentlichungstag der Anmeldung: 20.08.1997
(73) Patentinhaber: systec POS-Technology GmbH, 82178 Puchheim (DE)
(72) Erfinder: Sonnendorfer, Horst, 82178 Puchheim (DE); Wieth, Franz, 82178 Puchheim (DE)
(74) Vertreter: Brommer, Hans Joachim, Dr.-Ing.

(56) Entgegenhaltungen:
- EP-A- 0 442 016
- EP-A- 0 537 404
- WO-A-94/07215
- DE-A- 3 714 115
- DE-A- 4 206 606
- DE-A- 4 230 361
- DE-A- 4 235 473
- DE-A- 4 320 932
- DE-A- 4 400 576

## Beschreibung

Die Erfindung betrifft einen Transportwagen, insbesondere Einkaufswagen, der in einen gleichartigen Wagen einschiebbar und mit einer zur Aufnahme von Waren geeigneten Einrichtung, im allgemeinen in Form eines Korbes, ausgestattet ist und mit einer sich quer erstreckenden, rückwärtigen Griffstange, die an ihren Enden über Verbindungsteile an seitlichen Tragarmen angeordnet ist und zum Verfahren des Wagens dient, wobei der Wagen in Griffnähe ein Pfandschloß und einen Schlüssel zum Aneinanderschließen von in einer Parkkolonne stehenden Wagen bzw. zur Freigabe des vorzugsweise am Kolonnenende stehenden Wagens gegen Eingabe einer Pfandmarke aufweist und das Pfandschloß die Pfandmarke bei einer Wagenfreigabe verriegelt, beim Wiederanschließen des Wagens freigibt, wobei an dem Verbindungsteil ein einstückig angeformtes Pfandschloßgehäuse zur vollständigen oder teilweisen Aufnahme des Pfandschlosses vorgesehen ist, das im wesentlichen von dem Verbindungsteil und seinem Tragarm gehalten ist, und wobei an zumindest einem der Tragarme das zugehörige Verbindungsteil in Richtung auf die Griffstange verlängert ist.

Ein Transportwagen mit einer derartigen Position des Pfandschlosses ist durch die deutsche Patentanmeldung DE 44 00 576 bekannt. Dabei ist das Pfandschloß in einem Freiraum angeordnet, der durch zweimaliges Verbiegen eines Tragarmes in Richtung Wagenmitte entsteht. Der Freiraum ist also bezogen auf den Tragarm in Richtung der Außenseite des Transportwagens angeordnet. Dabei kann das Pfandschloß in das Verbindungsteil integriert sein. Bei dieser Positionierung des Pfandschlosses ist allerdings nachteilig, daß zunächst aufwendig Freiraum für das Pfandschloß geschaffen werden muß, indem einer der seitlichen Tragarme mehrfach gebogen werden muß. Die üblichen Außenmaße der Transportwagen müssen also verändert werden, so daß für die Montage des Pfandschlosses vergleichsweise hohe Kosten entstehen und ein nachträglicher Anbau an herkömmliche Transportwagen ausscheidet.

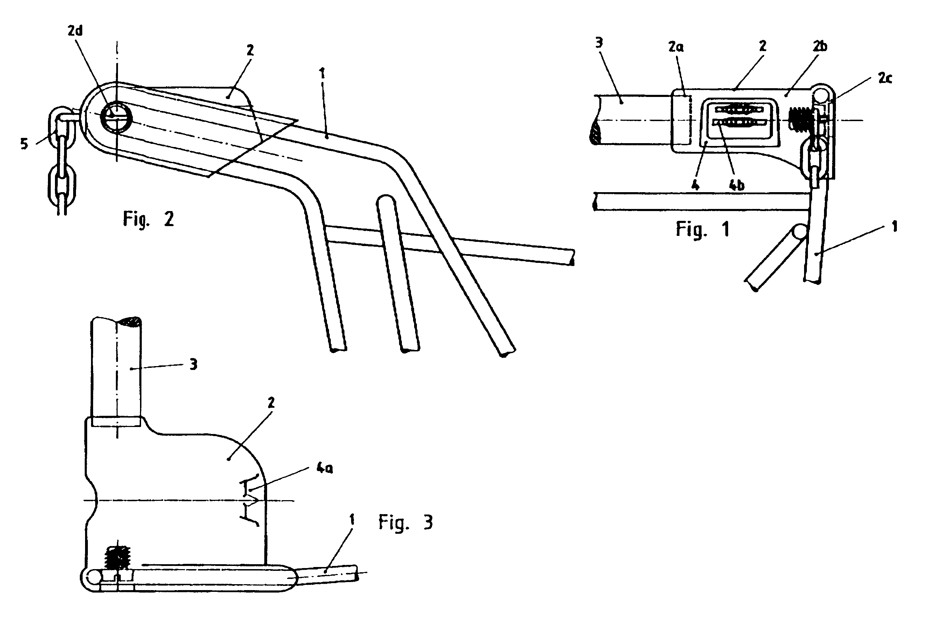

Ein Transportwagen mit einer ähnlichen Position des Pfandschlosses ist außerdem durch das deutsche Gebrauchsmuster 93 13 499 bekannt. Dabei ist an zwei gegenüberliegenden Seiten des Schloßgehäuses jeweils ein zylindrischer Stutzen angeordnet. Der eine Stutzen wird in die Griffstange gesteckt und dort verschraubt; der andere Stutzen wird in einen zylindrischen Ansatz einer als Verbindungsteil fungierenden Griffkappe gesteckt und darin mit Hilfe eines Spreizdübels verklemmt, wobei zugleich auch die Griffkappe an ihrem Tragarm befestigt wird. Dadurch stützt sich zwar das Pfandschloß sowohl an der Griffstange als auch drehfest an einem der beiden Grifftragarme ab; dafür geht jedoch der ergonomisch günstige äußere Griffbereich nahe dem Tragarm verloren, wie aus Figur 1 des Gebrauchsmusters deutlich wird. Außerdem erhöht die vielteilige Ausgestaltung den Montageaufwand.

Daneben ist es durch das europäische Patent Nr. 508 193 bekannt, das Pfandschloß separat von der Griffkappe oberhalb des einen Tragarmes zu montieren. Man erhält dadurch zwar eine absolut stabile, insbesondere verdrehsichere Anordnung des Schlosses, muß dafür aber zwei verschiedene Teile an dem genannten Tragarm montieren.

Schließlich ist es durch die europäische Patentanmeldung 199 274 bekannt, das Gehäuse des Pfandschlosses mit einem taschenförmigen Fortsatz zum Aufschieben auf den seitlichen Tragarm und mit einer zylindrischen Buchse zum Durchstecken der Griffstange zu versehen. Dadurch stützt sich das Pfandschloß formschlüssig am Tragarm und am Griff ab, so daß eine mutwillige Verdrehung ausgeschlossen ist. Andererseits steht das Pfandschloß in diesem Fall relativ weit nach oben vor, so daß es beim Ein- und Ausladen des Wagens beschädigt werden kann. Ähnlich liegen die Verhältnisse bei dem europäischen Patent 518 094.

Hiervon ausgehend liegt der vorliegenden Erfindung die Aufgabe zugrunde, den Einkaufswagen der eingangs beschriebenen Gattung, bei dem das Pfandschloß in Höhe der Griffstange angeordnet ist, hinsichtlich der Schloßmontage zu vereinfachen. Dabei soll das Be- und Entladen sowie das Schieben des Wagens in keiner Weise durch das Schloß beeinträchtigt werden, dieses vielmehr optimal in den Griffbereich integriert sein.

Diese Aufgabe wird erfindungsgemäß dadurch gelöst, daß zumindest an einem der beiden Grifftragarme das zugehörige Verbindungsteil in Richtung auf die Griffstange verlängert ist und ein einstückig angeformtes Gehäuse zur vollständigen oder teilweisen Aufnahme des Pfandschlosses bildet, wobei das Schloßgehäuse im wesentlichen von dem Verbindungsteil und seinem Tragarm gehalten ist.

Erfindungsgemäß wird also das Verbindungsteil, das bisher nur als Griffkappe fungiert, axial zur Aufnahme des Münzschlosses verlängert, wobei die einstückige Ausbildung des Verbindungsteiles mit dem Pfandschloß eine einfachere Montage ergibt, weil nur ein Teil befestigt werden muß. Außerdem erhält man durch die Abstützung des Schlosses am Verbindungsteil, das heißt letztlich am Tragarm, eine absolut verdrehsichere Anordnung, ohne das Be- und Entladen zu behindern. Dabei liegt das Pfandschloß mindestens teilweise auf dem Niveau der Griffstange, jedoch gegenüber dem Tragarm quer nach innen versetzt, so daß der Tragarm nicht verkürzt zu werden braucht.

In Weiterbildung der Erfindung hat es sich als zweckmäßig erwiesen, daß das Verbindungsteil ohne Zwischenstück, insbesondere ohne einen Griffstangenabschnitt, in das Schloßgehäuse übergeht und über dieses hinaus zur Bildung einer Aufnahme für die Griffstange verlängert ist, wobei es allein von seinem Tragarm gehalten wird. Man kann dadurch die Steckverbindung zwischen der verkürzten Griffstange und der ihr zugeordneten Seite des Schloßgehäuses ohne jegliche Verdrehsicherung und auch ohne einen in Axialrichtung wirksamen Formschluß ausbilden, wodurch sich die Herstellungs- und Montagekosten weiter verringern.

Das Verbindungsteil kann als herkömmliche Griffkappe ausgebildet sein, an die sich in Querrichtung das Schloßgehäuse anschließt. Es liegt aber auch im Rahmen der Erfindung, daß das Verbindungsteil in der Ansicht von oben ähnlich einem Viertelkreis geformt ist, so daß es mit dem einen Ende in Richtung des zugehörigen Grifftragarmes ausläuft und dort insbesondere als Steckelement, etwa als herkömmliche Griffkappe ausgebildet ist, während sein anderes Ende um etwa 90° dazu abgebogen in Richtung auf die Griffstange ausläuft. In diesem abgebogenen Bereich ist dann zweckmäßig das Pfandschloß untergebracht.

Besonders günstig ist es, wenn das Schloßgehäuse im Verbindungsteil durch eine Aussparung an der Ober- oder Unterseite oder durch einen zentralen Hohlraum im Verbindungsteil gebildet wird, so daß das Schloß teilweise oder ganz in das Verbindungsteil eintaucht. Dabei bietet es sich an, das Schloß als austauschbares Steckelement auszubilden, das an oder in dem Schloßgehäuse des Verbindungsteiles fixierbar ist. Man kann dadurch das gleiche Verbindungsteil für Schlösser mit unterschiedlichen Pfandmarken, insbesondere also für unterschiedliche Währungen verwenden.

Eine andere vorteilhafte Weiterbildung der Erfindung besteht darin, daß die genannte Aussparung bzw. der Hohlraum im Verbindungsteil anstelle des Schlosses durch ein Verschlußelement verschlossen werden kann. Die Aussparung erhält dann einen bündigen Abschluß, so daß das gleiche Verbindungsteil nur in spiegelbildlicher Ausführung am anderen Ende der Griffstange angeordnet werden kann. Der Wagen erhält dadurch ein absolut gleichmäßiges Aussehen, wenn man von den Münzschlitzen und dem Einsteckschlitz für den Schlüssel absieht. Außerdem bietet sich die zweckmäßige Möglichkeit, das Verbindungsteil zunächst ohne Schloß - nur mit Verschlußelement - auszuliefern und bei Bedarf später mit dem Schloß nachzurüsten. Auch kann das Schloß wahlweise links oder rechts eingebaut werden.

Für die Befestigung des Verbindungsteiles am Tragarm kommen verschiedene Möglichkeiten in Betracht, insbesondere die bereits praktizierten Klemm- oder Spreizverbindungen.

Der Schlüssel für das Ankoppeln am Nachbarwagen kann am Pfandschloß, zweckmäßig aber im Bereich des Verbindungsteiles aufgehängt werden.

Weitere Merkmale und Vorteile der Erfindung ergeben sich aus der nachfolgenden Beschreibung von Ausführungsbeispielen anhand der Zeichnung; dabei zeigt
- Figur 1: eine Ansicht auf einen Teil des Einkaufswagens von hinten in Fahrtrichtung;
- Figur 2: eine Seitenansicht auf den Wagenausschnitt aus Figur 1;
- Figur 3: eine Ansicht von oben auf den Ausschnitt von Figur 1;
- Figur 4: eine Rückansicht und eine Ansicht von oben auf den gleichen Wagenausschnitt bei einer alternativen Bauform;
- Figur 5: eine Rückansicht und eine Ansicht von oben auf die komplette Griffstange mit zwei Griffkappen bei einer weiteren Alternative;
- Figur 6a: ein Schrägbild auf ein Verbindungsteil gemäß einer dritten Alternative;
- Figur 6b: ein Schrägbild auf ein Verbindungsteil gemäß einer vierten Alternative;
- Figur 7a: eine Rückansicht auf die Bauform gemäß Figur 6a und
- Figur 7b und 7c: gleiche Rückansichten bei anderen Positionen des Pfandschlosses.

Die vorliegende Erfindung ist für alle Arten von Transportwagen geeignet, die eine zwischen seitlichen Tragarmen angeordnete Griffstange oder dergleichen zum Verschieben des Wagens aufweisen und die aufgrund ihrer Form zum Hintereinanderstapeln in Reihen geeignet sind. Ein typisches Ausführungsbeispiel eines solchen Wagens ist in dem europäischen Patent 508 193 beschrieben. Auf diese Schrift wird zur Vermeidung von Wiederholungen vollinhaltlich verwiesen.

Die Figuren 1 bis 3 zeigen jeweils die hintere rechte Ecke eines derartigen Transportwagens, also denjenigen Bereich, wo der seitlich schräg hochlaufende Grifftragarm 1 über ein Verbindugnsteil 2 mit der quer verlaufenden Griffstange 3 zu verbinden ist. Man erkennt dabei, daß dieses Verbindungsteil 2 einstückig ausgebildet ist, indem es an seinem linken Ende eine Steckverbindung 2a zur Aufnahme der Griffstange 3 aufweist, in seinem zentralen Bereich als Schloßgehäuse 2b für ein Münzpfandschloß 4 ausgebildet ist und am rechten Ende in eine Griffkappe 2c übergeht.

Die Griffkappe 2c hat die übliche Form, das heißt, sie umgibt taschenförmig die beiden übereinander angeordneten und unter leichtem Anstieg nach hinten laufenden Runddrähte, die den Grifftragarm 1 bilden und an ihrem rückwärtigen Ende im allgemeinen durch eine U-förmige Umbiegung miteinander verbunden sind. An seiner der verkürzten Griffstange 3 zugewandten Seite und in gedachter Verlängerung der Griffstange 3 ist das Verbindungsteil 2 zur Bildung des Schloßgehäuses 2b verlängert, derart, daß das Schloß 4 ganz oder zumindest weitgehend auf dem gleichen Höhenniveau wie die Griffstange 3 liegt. Man erhält dadurch eine außerordentlich stabile, kostengünstige und zugleich kompakte Anordnung des Pfandschlosses.

Die Befestigung des Verbindungsteiles 2 am Tragarm 1 kann in an sich bekannter Weise erfolgen, also insbesondere über eine stirnseitige Öffnung 2d, deren Achse das Zentrum der vorgenannten U-förmigen Umbiegung am rückwärtigen Ende des Grifftragarmes 1 durchquert. In diese Öffnung wird eine Schraube eingesetzt, die mit einer in der Tasche der Griffkappe angeordneten Mutter, insbesondere in Form eines Spreizdübels, verschraubt wird.

Wie die Figuren 1 bis 3 außerdem zeigen, ist im Übergangsbereich zwischen der Griffkappe 2c und dem Schloßgehäuse 2b ein Kopplungsglied montiert, beispielsweise eine Kette 5 mit einem nicht näher dargestellten Schlüssel, der zum Ankoppeln des nächsten Transportwagens dient, worauf dessen Pfandschloß in an sich bekannter Weise die Pfandmarke freigibt. Dazu weist jedes Pfandschloß 4 an seinem in Fahrtrichtung vorderen Bereich eine Öffnung 4a auf, die das Einstecken des an dem davor stehenden Wagen hängenden Schlüssels gestattet.

In dem gezeigten Ausführungsbeispiel sind die nach hinten ausgerichteten Einsteckschlitze 4b für die Pfandmarke(n) horizontal ausgerichtet. Dadurch ist das Pfandschloß 4 so flach, daß das Münzgehäuse 2b radial nach oben, hinten und unten bezogen auf die Griffstange 3 nicht weiter vorragt als die Steckverbindung 2a, die das Ende der Griffstange 3 umgibt. Das Verbindungsteil 2 kann deshalb auch in dem Bereich, wo das Schloß 4 untergebracht ist, als Handgriff dienen. Dadurch wird an einer weit außen liegenden Stelle des Wagens, also an einer für das Steuern des Wagens ergonomisch besonders günstigen Position ein Griff angeboten. Daß dieser Griff zugleich das Pfandschloß enthält, ist in keiner Weise störend, da es weder nach hinten zum Benutzer hin, noch nach oben über den Griff vorzustehen braucht.

Das eigentliche Pfandschloß 4 soll als austauschbares Steckelement an oder in dem Verbindungsteil 2 ausgebildet sein; es benötigt daher nur an derjenigen Seite, die nach dem Einbau in das Verbindungsteil 2 sichtbar bleibt, eine entsprechende Form oder Blende, die möglichst bündig in das umgebende Schloßgehäuse übergeht. Im Ausführungsbeispiel ist dies die Seite, wo der Münzeinwurf stattfindet. Selbstverständlich könnte das Pfandschloß stattdessen aber auch von der anderen Seite in das Verbindungsteil 2 eingebaut werden. Seine Arretierung im Verbindungsteil 2 erfolgt zweckmäßig durch eine Rast- oder Schnappverbindung, es kann aber auch eine formschlüssige Verbindung, etwa durch Schrauben gewählt werden.

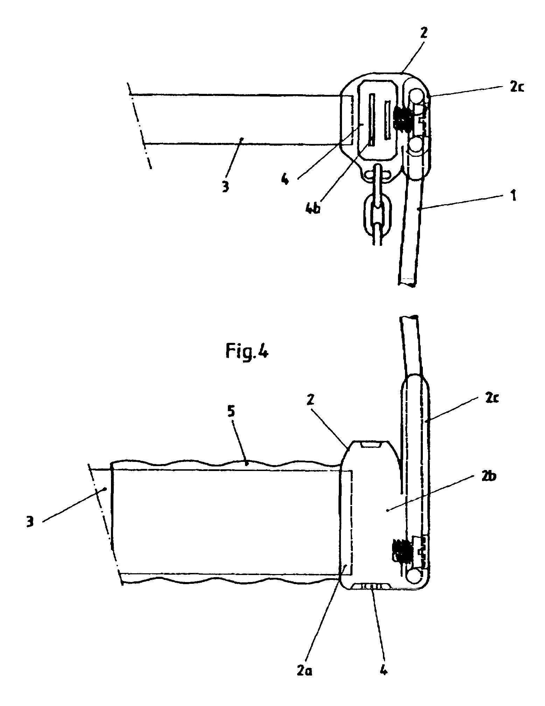

Die Bauform gemäß Figur 4 hat im Prinzip den gleichen Aufbau, kommt aber durch die vertikale Anordnung der Einsteckschlitze 4b mit einem geringeren Bauraum in Querrichtung aus. Außerdem wird die Verbindung zwischen Pfandschloß und Tragarm noch stabiler, weil von außen auf das Pfandschloß einwirkende Kräfte nur noch einen äußerst geringen Hebelarm haben.

Dieser Platzgewinn bietet die weitere vorteilhafte Möglichkeit, das Verbindungsteil 2 über das Schloßgehäuse hinaus in Richtung auf die Griffstange 3 unter Bildung eines Griffstückes 5 zu verlängern, wie dies in der unteren Abbildung von Figur 4 dargestellt ist. Gegebenenfalls kann dabei die Griffstange 3 verkürzt werden, indem die Aufnahme 2a an das freie Ende des Griffstückes verlegt wird.

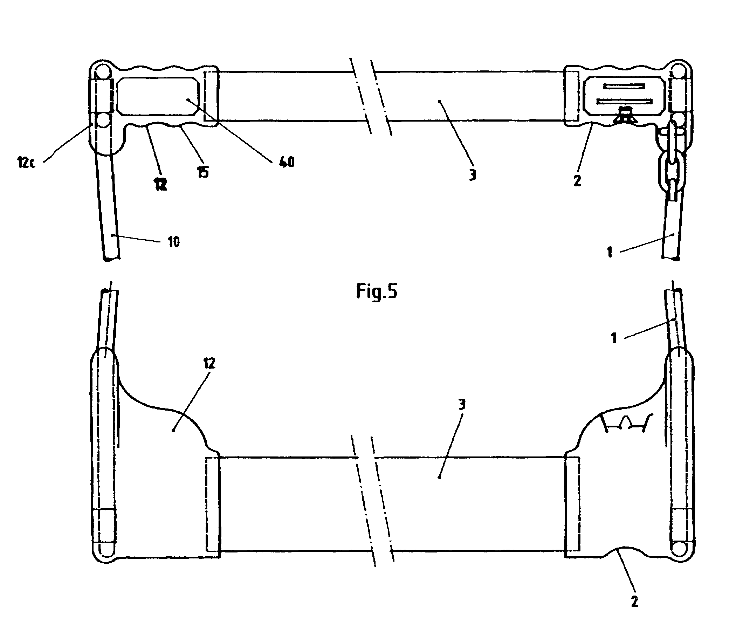

Damit dieser Griff auch am gegenüberliegenden Ende der Griffstange 3 zur Verfügung steht, kann gemäß Figur 5 die dort angeordnete Griffkappe 12c ebenfalls in Richtung der Griffstange 3 unter Bildung eines Griffstückes 15 verlängert werden. Man erhält dadurch zugleich auch ein weitgehend symmetrisches Aussehen an beiden Enden der Griffstange.

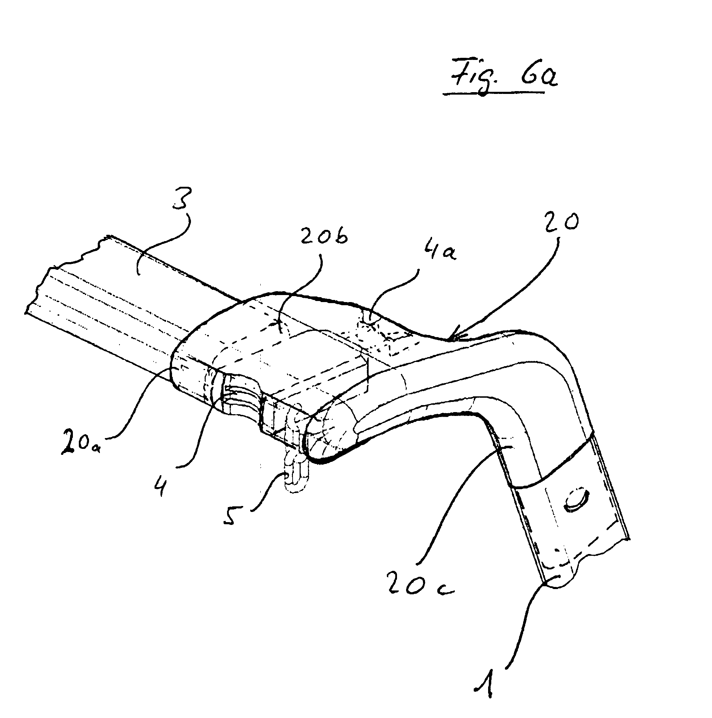

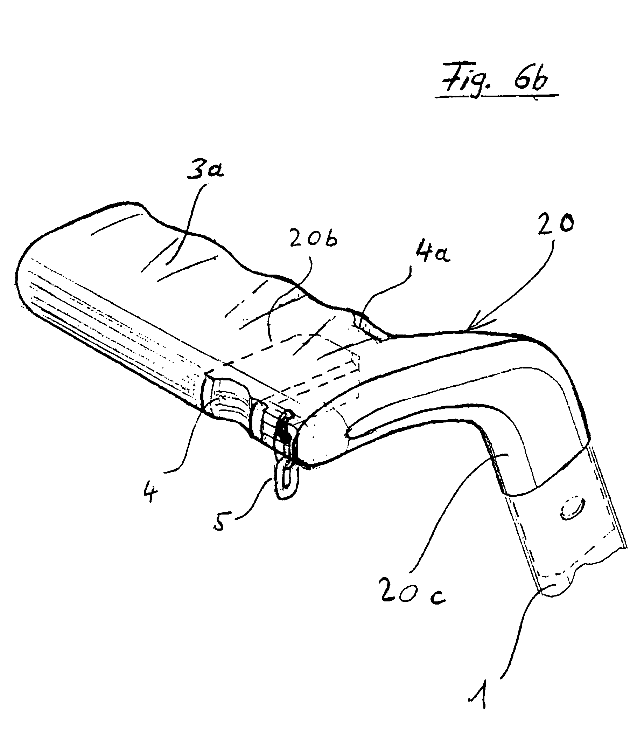

Figur 6a zeigt ein anders geformtes Verbindungsteil 20. Es hat im wesentlichen die Form eines Bügels, der mit seinem einen Ende 20c auf den Tragarm 1 aufgesteckt wird, der hier als ein einzelnes Rohr ausgebildet ist. Das Verbindungsteil 20 macht nach Abbiegung in die Horizontale eine weitere Abbiegung, und zwar um 90° in Querrichtung durch, so daß das dortige Bügelende 20b in die Griffstange 3 übergeht, und zwar über eine Aufnahme 20a.

Wie die Zeichnung außerdem zeigt, fungiert das zuletzt genannte Ende 20b des Verbindungsteiles 20 auch als Schloßgehäuse zur Aufnahme des Schlosses 4, das wie in den Figuren 1 bis 3 als horizontal einschiebbares Steckelement ausgebildet und in dem Verbindungsteil 20 arretiert ist. Das andere Ende des Schlosses 4 kann auf der Rückseite von Figur 6a, also in Fahrtrichtung, gegenüber dem ansonsten rohrförmigen Verbindungsteil 20 vorstehen, damit dort die Einstecköffnung 4a für das Einstecken des Schlüssels beim Wiederankoppeln des Wagens gut zugänglich ist. Dieser vorstehende Bereich ist so ausgeformt, daß er wiederum als Griff zum Schieben des Wagens zur Verfügung steht.

Im mittleren Bereich des Verbindungsteiles 20, zweckmäßig seitlich neben dem Pfandschloß 4 ist die Kette 5 mit dem Schlüssel zum Ankoppeln des nächstfolgenden Wagens montiert.

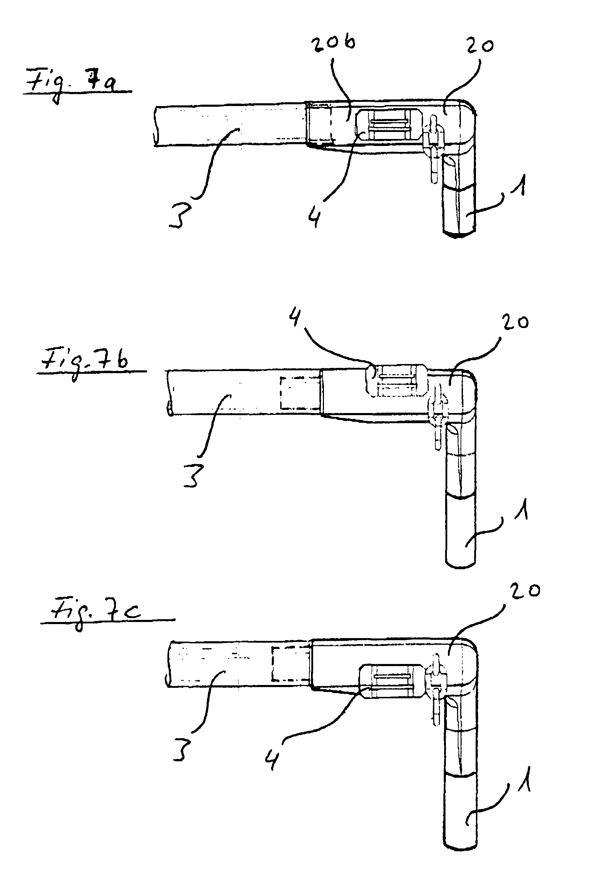

Figur 7a zeigt eine horizontale Rückansicht des in Figur 6a dargestellten Übergangsbereiches zwischen Tragarm 1 und Griffstange 3. Das Pfandschloß 4 liegt dabei auf dem gleichen Höhenniveau wie die Griffstange und ist beidseits sowie oben und unten von dem als Schloßgehäuse fungierenden Bereich 20b des Verbindungsteiles 20 umgeben.

Die Figuren 7b und 7c zeigen die gleiche Rückansicht, jedoch ist hier das Pfandschloß 4 nicht vollständig in das Verbindungsteil 20 eingebaut, sondern steht etwas nach unten bzw. nach oben vor.

In sämtlichen Figuren ist davon ausgegangen worden, daß die Griffstange 3 fest mit zumindest einem der beiden Tragarme verbunden ist. Bei ovalem Querschnitt der Griffstange 3 kann es jedoch auch zweckmäßig sein, zwischen der Griffstange und den beiden angrenzenden Verbindungsteilen eine Drehlagerung vorzusehen, die es gestattet, die Griffstange 3 in unterschiedlichen Drehpositionien zu arretieren. Dadurch kann die Griffstange immer auf die ergonomisch günstigste Position eingestellt werden, unabhängig von der von Wagentyp zu Wagentyp unterschiedlichen Neigung der Tragarme 1.

Stattdessen ist es aber auch - vor allem bei Griffrohren mit rundem Querschnitt - möglich, das Griffrohr einstückig mit den beiden Verbindungsteilen 2 bzw. 20 auszubilden, so daß man nur noch ein einziges Teil hat, das auf die beiden Tragarme aufzustecken ist.

Desweiteren liegt es gemäß Figur 6b im Rahmen der Erfindung, auf das durchgehende Griffrohr 3 zu verzichten und stattdessen an beiden Seiten des Wagens nur je einen Griffstummel 3a an das entsprechende Verbindungsteil 2 anzuformen. Diese Griffstummel können direkt als Schloßgehäuse ausgebildet sein, insbesondere also eine Aussparung aufweisen, in die das Schloß als Steckelement eingesetzt wird, oder die im Fall des Griffstummels auf der anderen Seite durch ein Verschlußelement verschlossen wird. Die Aufnahme 20a für das Griffrohr 3 entfällt in diesem Fall.

Soweit vorstehend von Pfandmarken gesprochen wurde, sind darunter neben Wertmarken, Münzen oder dergleichen auch Datenträger oder Lochkarten zu verstehen. Bei letzteren liegt es im Rahmen der Erfindung, das Pfandschloß durch eine Abbuchungsautomatik zu ergänzen.

## Patentansprüche

1. Transportwagen, insbesondere Einkaufswagen, der in einen gleichartigen Wagen einschiebbar und mit einer zur Aufnahme von Waren geeigneten Einrichtung, insbesondere einem Korb, ausgestattet ist, und mit einer sich quer erstreckenden, rückwärtigen Griffstange (3), die an ihren Enden über Verbindungsteile (2) an seitlichen Tragarmen (1) angeordnet ist und zum Verfahren des Wagens dient, wobei der Wagen in Griffnähe ein Pfandschloß (4) und einen Schlüssel zum Aneinanderschließen von in einer Parkkolonne stehenden Wagen bzw. zur Freigabe des vorzugsweise am Kolonnenende stehenden Wagens gegen Eingabe einer Pfandmarke aufweist und das Pfandschloß (4) die Pfandmarke bei der Wagenfreigabe verriegelt, beim Wiederanschließen des Wagens freigibt, wobei an dem Verbindungsteil (2) ein einstückig angeformtes Pfandschloßgehäuse (2b, 20) zur vollständigen oder teilweisen Aufnahme des Pfandschlosses (4) vorgesehen ist, das im wesentlichen von dem Verbindungsteil (2, 20) und seinem Tragarm (1) gehalten ist, und wobei an zumindest einem der Tragarme (1) das zugehörige Verbindungsteil (2) in Richtung auf die Griffstange (3) verlängert ist,
dadurch gekennzeichnet,
daß diese Verlängerung das Pfandschloßgehäuse (2b, 20) bildet, wobei das Pfandschloß (4) zwischen der entsprechend verkürzten Griffstange (3) einerseits und dem seitlichen Tragarm (1) andererseits angeordnet ist.

2. Transportwagen nach Anspruch 1,
dadurch gekennzeichnet,
daß das Verbindungsteil (2, 20) in weiterer Verlängerung eine Aufnahme (2a, 20a) für die Griffstange (3) aufweist.

3. Transportwagen nach Anspruch 1,
dadurch gekennzeichnet,
daß das Schloßgehäuse (2b) allein von dem Verbindungsteil (2) und seinem Tragarm (1) gehalten ist.

4. Transportwagen nach Anspruch 1,
dadurch gekennzeichnet,
daß das Verbindungsteil (20) am einen Ende (20c) in Richtung auf den zugehörigen Grifftragarm (1) ausläuft, am anderen Ende (20a) jedoch abgebogen in Richtung auf die Griffstange (3) ausläuft.

5. Transportwagen nach Anspruch 1,
dadurch gekennzeichnet,
daß das Schloßgehäuse (2b, 20b) durch eine Aussparung im Verbindungsteil (2, 20) gebildet ist.

6. Transportwagen nach Anspruch 5,
dadurch gekennzeichnet,
daß die Aussparung durch ein Verschlußelement (40) anstelle des Schlosses (4) zu verschließen ist.

7. Transportwagen nach Anspruch 1,
dadurch gekennzeichnet,
daß das Schloß (4) als austauschbares Steckelement ausgebildet ist, das an oder in dem Schloßgehäuse (2b, 20b) fixierbar ist.

8. Transportwagen nach Anspruch 1,
dadurch gekennzeichnet,
daß das Schloßgehäuse (2b, 20b) die Form eines Handgriffes hat.

9. Transportwagen nach Anspruch 1,
dadurch gekennzeichnet,
daß zumindest die mit dem Pfandmarkenschlitz (4b) versehene Seite des Schlosses (4) bündig an das Schloßgehäuse (2b, 20b) anschließt.

10. Transportwagen nach Anspruch 1,
dadurch gekennzeichnet,
daß die Griffstange (3) um ihre Achse verdrehbar und in unterschiedlichen Drehstellungen arretierbar an ihren Verbindungsteilen (2, 20) gelagert ist.

11. Transportwagen nach Anspruch 1,
dadurch gekennzeichnet,
daß die Griffstange (3) einstückig mit zumindest dem einen Verbindungsteil (2) zweckmäßig mit beiden Verbindungsteilen (2) verbunden ist.

12. Transportwagen nach Anspruch 1,
dadurch gekennzeichnet,
daß das Verbindungsteil (2, 20) über das Schloßgehäuse (2b, 20b) hinaus in Richtung auf die Griffstange (3) unter Bildung eines zur Griffstange etwa koaxialen Griffes (5) verlängert ist.

13. Transportwagen nach Anspruch 1,
dadurch gekennzeichnet,
daß auch an dem anderen Grifftragarm (10) das zugehörige Verbindungsteil (12) spiegelbildlich zum Verbindungsteil (2, 20) ausgebildet und gleichermaßen einstückig in Richtung auf die Griffstange (3) verlängert ist.

14. Transportwagen nach Anspruch 12,
dadurch gekennzeichnet,
daß das Verbindungsteil (12) des anderen Tragarmes (10) im Schloßgehäuse anstelle des Pfandschlosses (4) zumindest einen Verschluß (40) oder ein anderes Funktionsteil aufweist.

15. Transportwagen nach Anspruch 1,
dadurch gekennzeichnet,
daß an Stelle einer durchgehenden Griffstange (3) nur je ein Griffstummel (3a) an den Verbindungsteilen (2, 20) angeformt ist.

16. Transportwagen nach Anspruch 15,
dadurch gekennzeichnet,
daß der Griffstummel (3a) das Schloßgehäuse (20b) enthält oder daran angeordnet ist.

## Claims

1. A transport cart, particularly a shopping cart, which may be slid into a similar cart and is provided with a device, particularly a basket, suitable for accommodating goods, and including a transversely extending rear handlebar (3), which is arranged at its ends on lateral support arms (1) via connecting members (2) and is used to move the cart, wherein the cart has a deposit lock (4) in the vicinity of the handle and a key for connecting together carts standing in a parked line or for releasing the cart standing preferably at the end of the line when a deposit token is inserted and the deposit lock (4) locks the deposit token when the cart is released and releases it when the cart is reconnected, whereby provided on the connecting member (2) there is an integrally formed deposit lock housing (2b, 20) for completely or partially accommodating the deposit lock (4) which is substantially held by the connecting member (2, 20) and its support arm (1) and whereby on at least one of the support arms (1) the associated connecting member (2) is extended in the direction towards the handlebar (3), characterised in that this extension constitutes the deposit lock housing (2b, 20), whereby the deposit lock (4) is arranged between the correspondingly shortened handlebar (3) on the one hand and the lateral support arm (1) on the other hand.

2. A transport cart as claimed in Claim 1, characterised in that the connecting member (2, 20) has a recess (2a, 20a) for the handlebar (3) in a further extension.

3. A transport cart as claimed in Claim 1, characterised in that the lock housing (2b) is held only by the connecting member (2) and the support arm (1).

4. A transport cart as claimed in Claim 1, characterised in that the connecting member (20) terminates at one end (20c) in the direction towards the associated handle support arm (1) but terminates at the other end (20a) bent in the direction towards the handlebar (3).

5. A transport cart as claimed in Claim 1, characterised in that the lock housing (2b, 20b) is constituted by a recess in the connecting member (2, 20).

6. A transport cart as claimed in Claim 5, characterised in that the recess may be closed by a closure element (40) instead of the lock (4).

7. A transport cart as claimed in Claim 1, characterised in that the lock (4) is constructed in the form of a replaceable plug element, which may be fixed on or in the lock housing (2b, 20b).

8. A transport cart as claimed in Claim 1, characterised in that the lock housing (2b, 20b) has the form of a handle.

9. A transport cart as claimed in Claim 1, characterised in that at least the side of the lock (4) provided with the deposit token slot (4b) is flush-connected to the lock housing (2b, 20b).

10. A transport cart as claimed in Claim 1, characterised in that the handlebar is mounted on its connecting members (2, 20) so as to be rotatable about its axis and lockable in different rotatable positions.

11. A transport cart as claimed in Claim 1, characterised in that the handlebar (3) is integrally connected to at least one connecting member (2), conveniently to both connecting members (2).

12. A transport cart as claimed in Claim 1, characterised in that the connecting member (2, 20) is extended beyond the lock housing (2b, 20b) in the direction towards the handlebar (3) to form a handle (5) approximately coaxial with the handlebar.

13. A transport cart as claimed in Claim 1, characterised in that on the other handle support arm (10) also the associated connecting member (12) is constructed mirror symmetrically with respect to the connecting member (2, 20) and is similarly extended integrally in the direction towards the handlebar (3).

14. A transport cart as claimed in Claim 12, characterised in that the connecting member (12) of the other support arm (10) has at least one closure (40) or another functional member in the lock housing instead of the deposit lock (4).

15. A transport cart as claimed in Claim 1, characterised in that instead of a continuous handlebar (3) only a respective handle trunnion (3a) is formed on the connecting members (2, 20).

16. A transport cart as claimed in Claim 15, characterised in that the handle trunnion (3a) contains the lock housing (20b) or is arranged on it.

## Revendications

1. Chariot de transport, notamment chariot de supermarché, insérable dans un chariot du même type, et équipé d'un dispositif adapté à la réception de marchandises, notamment un panier, et équipé d'une barre-poignée (3) placée sur l'arrière et s'étendant transversalement, posée sur des bras de supports (1) latéraux à ses extrémités à l'aide de pièces de raccordement (2) et servant au déplacement du chariot, le chariot présentant une serrure de consigne (4) à proximité de la barre-poignée et une clé pour le raccordement de chariots se trouvant dans une colonne de chariots ou pour la libération du chariot situé de préférence à la fin de la colonne de chariots sur insertion d'un jeton de consigne et la serrure de consigne (4) verrouillant le jeton de consigne lors de la libération du chariot, et le libérant lors de la remise du chariot, un boîtier de serrure à consigne (2b, 20) formé d'une seule pièce sur la pièce de raccordement (2) étant prévu pour le logement complet ou partiel de serrure à consigne (4) et étant maintenu essentiellement par la pièce de raccordement (2, 20) et son bras de support (1), et la pièce de raccordement (2) correspondante étant prolongée au moins sur l'un des bras de support (1) en direction de la barre-poignée (3), **caractérisé en ce que** ce prolongement forme le boîtier de la serrure de consigne (2b, 20), la serrure de consigne (4) étant placée d'une part entre la barre-poignée (3) raccourcie de manière correspondante et le bras de support (1) latéral d'autre part.

2. Chariot de transport selon la revendication 1, **caractérisé en ce que** la pièce de raccordement (2, 20), dans son prolongement, présente un logement (2a, 20a) pour la barre-poignée (3).

3. Chariot de transport selon la revendication 1, **caractérisé en ce que** le boîtier de serrure (2b) est maintenu seulement par la pièce de raccordement (2) et son bras de support (1).

4. Chariot de transport selon la revendication 1, **caractérisé en ce que** la pièce de raccordement (20) se termine à une extrémité (20c) en direction du bras de support (1) de la barre-poignée correspondant, et, qu'à l'autre extrémité (20a), elle se termine cependant de manière cintrée en direction de la barre-poignée (3).

5. Chariot de transport selon la revendication 1, **caractérisé en ce que** le boîtier de serrure (2b, 20b) est formé par un évidement dans la pièce de raccordement (2, 20).

6. Chariot de transport selon la revendication 5, **caractérisé en ce que** l'évidement doit être fermé par un élément de fermeture (40) à la place de la serrure (4).

7. Chariot de transport selon la revendication 1, **caractérisé en ce que** la serrure (4) est formée comme un élément d'emboîtement interchangeable qui peut être fixé sur ou dans le boîtier de serrure (2b, 20b).

8. Chariot de transport selon la revendication 1, **caractérisé en ce que** le boîtier de serrure (2b, 20b) a la forme d'une poignée.

9. Chariot de transport selon la revendication 1, **caractérisé en ce qu**'au moins le côté de la serrure (4) muni de la fente pour le jeton de consigne (4b) est raccordé au boîtier de serrure (2b, 20b) sur le même niveau.

10. Chariot de transport selon la revendication 1, **caractérisé en ce que** la barre-poignée (3) est placée de façon à tourner autour de son axe et à pouvoir être bloquée dans différentes positions de rotation sur ses pièces de raccordement (2, 20).

11. Chariot de transport selon la revendication 1, **caractérisé en ce que** la barre-poignée (3) est raccordée en une seule pièce avec au moins l'une des pièces de raccordement (2), de façon utile avec les deux pièces de raccordement (2).

12. Chariot de transport selon la revendication 1, **caractérisé en ce que** la pièce de raccordement (2, 20) est prolongée au-delà du boîtier de serrure (2, 20b) en direction de la barre-poignée (3) en formant une poignée (5) presque coaxiale à la barre-poignée.

13. Chariot de transport selon la revendication 1, **caractérisé en ce que** la pièce de raccordement (12) correspondant à l'autre bras de support de la barre-poignée (10) est aussi formée de façon symétriquement inverse à la pièce de raccordement (2, 20) et prolongée pareillement en une seule pièce en direction de la barre-poignée (3).

14. Chariot de transport selon la revendication 12, **caractérisé en ce que** la pièce de raccordement (12) de l'autre bras de support (10) présente au moins une fermeture (40) ou une autre pièce de fonction dans le boîtier de serrure à la place de la serrure de consigne (4).

15. Chariot de transport selon la revendication 1, **caractérisé en ce que** seulement un bout de poignée (3a) est respectivement formé sur les pièces de raccordement (2, 20) à la place d'une barre-poignée (3a) continue.

16. Chariot de transport selon la revendication 15, **caractérisé en ce que** le bout de poignée (3a) contient le boîtier de serrure (20b) ou est placé contre lui.
